# EUROPÄISCHE PATENTSCHRIFT

(11) **EP 1 179 671 B1**
(45) Veröffentlichungstag und Bekanntmachung des Hinweises auf die Patenterteilung: **09.09.2015**
(21) Anmeldenummer: 01117710.2
(22) Anmeldetag: 27.07.2001
(51) Int. Cl.: F02D 41/22, F02D 21/08, F02D 41/30

(54) **Verfahren zum Überprüfen eines Kraftstoff-Einspritzsystems**
Method for checking a fuel injection system
Méthode pour tester un système d' injection de carburant

(30) Priorität: 07.08.2000 DE 1038444
(43) Veröffentlichungstag der Anmeldung: 13.02.2002
(73) Patentinhaber: Volkswagen Aktiengesellschaft, 38440 Wolfsburg (DE)
(72) Erfinder: Drückhammer, Jens, Dr., 38108 Braunschweig (DE); Wehling, Wolfgang, 38112 Braunschweig (DE)
(74) Vertreter: Pohlmann, Bernd Michael

(56) Entgegenhaltungen:
- EP-A- 1 013 917
- DE-A1- 3 226 849
- DE-A1- 19 844 086
- US-A- 5 140 961
- US-A- 5 727 533

## Beschreibung

Die Erfindung betrifft ein Verfahren zum Überprüfen eines Kraftstoff-Einspritzsystems mit den Im Oberbegriff des Anspruchs 1 genannten Merkmalen,

Es ist bekannt, dass eine Verbrennungskraftmaschine (Otto-Motor) zu ihrem Betrieb ein Kraftstoff-Luft-Gemisch benötigt. Von einem Kraftstoff-Luft-Verhältnis innerhalb dieses Gemisches ist der Betrieb der Verbrennungskraftmaschine im Wesentlichen abhängig. Hierdurch ergibt sich beispielsweise ein Kraftstoffverbrauch, eine Leistungsbereitstellung (Drehmoment) und/oder eine Abgasnachbehandlungsmöglichkeit der Verbrennungskraftmaschine. Entsprechend gewünschter Betriebsmodi der Verbrennungskraftmaschine erfolgt bekannterweise eine Veränderung des Mischungsverhältnisses innerhalb des Kraftstoff-Luft-Gemisches.

Zur Gemischbildung ist der Einsatz von Kraftstoff-Einspritzsystemen bekannt, mittels denen der Kraftstoff in eine Verbrennungsluft zugeführt wird. Hier wird zwischen Systemen zur äußeren Gemischbildung und Systemen zur inneren Gemischbildung unterschieden, wobei die Kraftstoffeinspritzung zentral in ein Saugrohr für alle Zylinder der Verbrennungskraftmaschine oder dezentral für jeden der Zylinder der Verbrennungskraftmaschine erfolgen kann. Die Kraftstoff-Einspritzsysteme nutzen eine Druckdifferenz zwischen einem Kraftstoffdruck und einem Saugrohrdruck aus. Entsprechend einer Freigabe eines Kraftstoff-Einspritzventils und einer definierten Druckdifferenz zwischen dem Kraftstoff und der Verbrennungsluft ergibt sich die eingespritzte Kraftstoffmenge. Es wird deutlich, dass zum Einstellen dieser definierten Druckdifferenz und somit zum Festlegen einer definierten Ansteuerung eines Einspritzventils Kenntnisse über den aktuellen Saugrohrdruck erforderlich sind. Dieser beeinflusst unmittelbar die Gemischbildung. Bekannt ist, in einem Saugrohr der Verbrennungskraftmaschine wenigstens einen Saugrohrdrucksensor anzuordnen, dessen Sensorausgangssignal einem Motorsteuergerät zur weiteren Verarbeitung zur Verfügung gestellt wird.

Es wird deutlich, dass schon geringe Saugrohrdruckänderungen zu einer veränderten Gemischbildung beitragen können. Derartige Saugrohrdruckänderungen können auch ungewollt und/oder nur scheinbar sein. Beispielsweise bei einer alterungsbedingten Änderung einer Sensorkennlinie des Saugrohrdrucksensors ergeben sich Abweichungen im Sensorausgangssignal von dem tatsächlichen Ist-Saugrohrdruck. Durch diesen entsprechenden Fehler ergibt sich eine fehlerbehaftete Auswertung im Motorsteuergerät, so dass negative Auswirkungen auf die Gemischbildung nicht auszuschließen sind.

Aus der DE 32 26 849 A1 ist eine Vorrichtung zum Überwachen eines Drucksensors bekannt, bei der ein Signalvergleich eines Messsignals des Drucksensors zu einem bekannten physikalischen Zustand der Sauganlage durchgeführt wird. Hierdurch kann ein physikalisch unmögliches Drucksignal erkannt werden. Nachteilig hierbei ist, dass nur eine grobe Aussage über die Funktion beziehungsweise Nichtfunktion des Drucksensors getroffen werden kann.

Aus der DE 198 44 086 A1 ist eine Einrichtung zum Steuern einer Brennkraftmaschine bekannt, mittels der zum genauen Ermitteln eines Saugrohrdrucks ein dynamisches Modell der Sauganlage verwendet wird. Dies erfordert einen erheblichen Aufwand und lässt Fehler der an der Madellrechnung beteiligten Ausgangsinformationen, beispielsweise Messgrößen einer Drehzahl beziehungsweise Öffnungsgrad einer Drosselklappe, unberücksichtigt.

Aus der EP 101 3917 A2 ist bereits ein Verfahren zum Prüfen des Tankentlüftungssystems eines Kraftfahrzeuges bekannt bei dem aus einem Tank entweichende kohlenwasserstoffhaltige flüchtige Gase über eine Filtereinrichtunggeführt und in dieser gesammelt werden. Durch eine Beaufschlagung der Filtereinrichtung mit einem Unterdruck wird das Filtergut über eine Sauganlage einem Verbrennungsprozess des Kraftfahrzeuges zugeführt. Dabei wird eine Verbindung zwischen der Filtereinrichtung und der Sauganlage durch ein getaktet ansteuerbares Schaltmittel geöffnet bzw. geschlossen. Ein Ansteuersignal für das Schaltmittel mit einer einen Zustand der Sauganlage definierenden Messgröße wird kreuzkorreliert. Als Meßgröße wird ein Saugrohrdruck verwendet. Der Korrelationskoeffizient wird als Diagnosesignal des Tankentlüftungssystems ausgewertet.

Der Erfindung liegt die Aufgabe zugrunde, ein Verfahren der gattungsgemäßen Art zu schaffen, mit dem in einfacher und sicherer Weise eine Überprüfung eines Saugrohrdrucksensors eines Kraftstoff-Einspritzsystems möglich ist.

Erfindungsgemäß wird dieser Aufgabe durch ein Verfahren mit den Im Anspruch 1 genannten Merkmalen gelöst. Dadurch, dass ein Sensorsignal des Saugrohrdrucksensors mit einem Ansteuersignal eines den Saugrohrdruck beeinflussenden Stellmittels kreuzkorreliert wird und ein Kreuzkorrelationskoeffizient als Diagnosesignal des Saugrohrdrucksensors ausgewertet wird, wird vorteilhaft ein sehr genaues und sicheres Diagnoseergebnis für den Saugrohrdrucksensor erhalten, dass neben der allgemeinen Funktionsüberwachung auch eine qualitative Aussage über das vom Saugrohrdrucksenors gelieferte Messsignal zulässt.

In bevorzugter Ausgestaltung der Erfindung ist vorgesehen, dass als Ansteuersignal eines den Saugrohrdruck beeinflussenden Stellmittels ein Ansteuersignal für eine Drosselklappe, ein Ansteuersignal eines Abgasrückführungsventils und/oder ein Ansteuersignal eines Tankehtlüftungsventils verwendet wird. Diese Ansteuersignale werden vom Motorsteuergerät bekanntermaßen bereitgestellt und stehen somit bei üblichen Ausstattungen von Kraftfahrzeugen für die erfindungsgemäße Korrelationsrechnung zur Verfügung. Insbesondere, wenn die Kreuzkorrelation durch ein Motorsteuergerät des Kraftfahrzeuges durchgeführt wird, können die Ansteuersignale in einfacher Weise abgegriffen werden.

In weiterer bevorzugter Ausgestaltung der Erfindung ist vorgesehen, dass vor Durchführung der Kreuzkorrelation Freigabebedingungen für das Prüfverfahren überprüft werden. Hierdurch wird eine Zuverlässigkeit der Überprüfung des Saugrohrdrucksensors weiter erhöht. Insbesondere wird hierdurch sichergestellt, dass für die Kreuzkorrelation mit dem Sensorsignal herangezogene Ansteuersignale von den Saugrohrdruck beeinflussenden Stellmitteln nicht durch eine zum Zeitpunkt der Kreuzkorrelation gerade vorgenommene Änderung der Ansteuersignale beeinflusst sind. Hierdurch werden ungewollte Einflüsse auf ein Betriebsmanagement der Verbrennungskraftmaschine durch die Kreuzkorrelation verhindert. Ferner wird hierdurch die Genauigkeit und Zuverlässigkeit des Diagnoseverfahrens insgesamt wesentlich erhöht.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Ansicht einer Verbrennungskraftmaschine;
- Figur 2: ein Blockschaltbild für die Durchführung eines Verfahrens zum Prüfen eines Messsignales eines Saugrohrdrucksensors;
- Figur 2a: ein Blockschaltbild für die Festlegung von Freigabebedingungen für das Prüfverfahren und
- Figur 3: ein Blockschaltbild für die Durchführung der Kreuzkorrelation zwischen einem Testmuster und dem Sensorsignal.

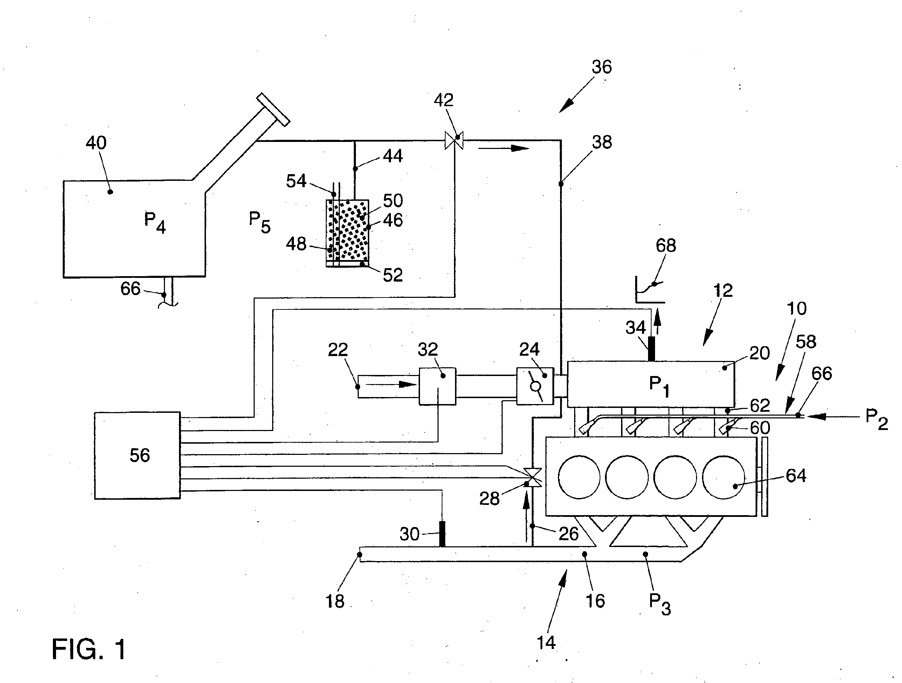

Figur 1 zeigt schematisch eine Verbrennungskraftmaschine 10. Der Verbrennungskraftmaschine 10 ist eine Sauganlage 12 und eine Abgasanlage 14 zugeordnet. Die Abgasanlage 14 umfasst wenigstens einen Abgaskanal 16, der zu einem Abgasauslass 18 führt. In dem Abgaskanal 16 kann wenigstens eine, hier nicht dargestellte Katalysatoreinrichtung integriert sein.

Die Sauganlage 12 umfasst ein Saugrohr 20, über das von einer Quelle 22 mittels Unterdruck eine Verbrennungsluft der Verbrennungskraftmaschine zuführbar ist. Die Verbrennungsluftzufuhr ist mit einer Drosselklappe 24 regelbar.

Der Abgaskanal 16 ist mit dem Saugrohr 20 über eine Verbindungsleitung 26 verbunden, in die ein Abgasrückführungsventil 28 integriert ist. In den Abgaskanal 16 ist ferner eine Lambdasonde 30 integriert. Die Sauganlage 12 umfasst einen Luftmassensensor 32 sowie einen Saugrohrdrucksensor 34.

Der Verbrennungskraftmaschine 10 ist ferner ein Tankentlüftungssystem 36 zugeordnet. Das Tankentlüftungssystem 36 umfasst eine Verbindungsleitung 38, die einen Tank 40 mit der Sauganlage 12 verbindet. Die Verbindungsleitung 38 mündet hierbei in das Saugrohr 20. In die Verbindungsleitung 38 ist ein Tankentlüftungsventil 42 integriert. Von der Verbindungsleitung 26 zweigt ferner eine Verbindung 44 zu einer Filtereinrichtung 46 ab. Die Filtereinrichtung 46 ist beispielsweise ein Aktivkohlebehälter 48, innerhalb dem eine Schüttung von Aktivkohle 50 angeordnet ist. Von einem der Aktivkohle 50 nachgeordneten Sammelraum 52 führt eine Verbindung 54 ins Freie.

Das Tankentlüftungsventil 42, der Saugrohrdrucksensor 34, der Luftmassensensor 32, die Drosselklappe 24, das Abgasrückführungsventil 28 und die Lambdasonde 30 sind über hier angedeutete Messleitungen beziehungsweise Steuerleitungen mit einem Motorsteuergerät 56 verbunden.

Der Verbrennungskraftmaschine 10 ist ferner ein Kraftstoff-Einspritzsystem 58 zugeordnet, das gemäß dem hier gezeigten Ausführungsbeispiel vier Einspritzventile 60 umfasst, die in Verbindungsleitungen 62 des Saugrohres 20 zu den einzelnen Zylindern 64 der Verbrennungskraftmaschine 10 münden. Die Einspritzventile 60 sind mit einer Kraftstoffzuführung 66 verbunden und ebenfalls über das Motorsteuergerät 56 in bekannter Weise ansteuerbar.

Aufbau und Wirkungsweise der in Figur 1 gezeigten Verbrennungskraftmaschine 10 sind allgemein bekannt, so dass hier nur auf die allgemeine Funktion eingegangen werden soll.

Durch die Sauganlage 12 wird eine Verbrennungsluft zugeführt, die unter einem bestimmten Druck p1 steht. Die Menge der zugeführten Verbrennungsluft kann durch die in die Sauganlage 12 eingebaute Drosselklappe 24 integriert werden. Ferner steht der Kraftstoff in der Kraftstoffzuführung 66 unter einem Druck p2, der durch Ansteuerung von in Figur 1 nicht gezeigten Kraftstoff-Druckregelsystemen eingestellt werden kann. Dieser Druck p2 des Kraftstoffes wird so eingestellt, dass eine definierte Druckdifferenz zwischen dem Druck p2 des Kraftstoffes und dem Druck p1 der Verbrennungsluft gegeben ist. Bei geöffneten Einspritzventilen 60 ergibt sich daher eine Druckdifferenz zwischen dem Druck p2 und dem Druck p1, die über die Öffnungszeit der Einspritzventile 60 die den Verbrennungsprozess zugeführte Menge an Kraftstoff bestimmt. Dieses so erzeugte Kraftstoff-Luft-Gemisch wird innerhalb der Verbrennungskraftmaschine 10 verbrannt.

Das während des Verbrennungsprozesses entstehende Abgas wird über die Abgasanlage 14 gereinigt und abgeführt. Soll der Verbrennungsluft eine Teilmenge des Abgases zugeführt werden, wird das Abgasrückführungsventil 28 über das Motorsteuergerät 56 angesteuert. Das Abgasrückführungsventil 28 ist beispielsweise ein elektromagnetisches Proportionalventil. Über die Ansteuerung des Abgasrückführungsventils 28 kann die Menge des der Verbrennungsluft zugeführten Abgases eingestellt werden. Um die Menge des rückgeführten Abgases über der Zeit einstellen zu können, ist eine Druckdifferenz zwischen dem Druck p1 der Verbrennungsluft im Saugrohr 20 und einem Druck p3 des Abgases beziehungsweise die sich hieraus ergebene Druckdifferenz wichtig.

Ferner herrscht im Tank 40 ein Druck p4 sowie allgemein ein Umgebungsdruck der Verbrennungskraftmaschine p5. Steigt der Druck p4 im Tank 40 über den Umgebungsdruck p5 an, erfolgt über die Verbindungsleitung 38 sowie die Verbindung 44 und die Filtereinrichtung 46 eine Entlüftung des Tankes 40. Soll eine Reinigung der Filtereinrichtung 46 erfolgen, wird das Tankentlüftungsventil 42 geöffnet. Hierdurch liegt der Saugrohrdruck p1 am Tank 40 und der Filtereinrichtung 46 an. Da der Saugrohrdruck p1 geringer ist als der Druck p4 und der Druck p5, ergibt sich ein Druckgefälle, durch das die Kraftstoffdämpfe aus dem Tank 40 und die in der Aktivkohle 50 gespeicherten Kraftstoffdämpfe über das geöffnete Tankentlüftungsventil 42 angesaugt und der Verbrennungsluft der Verbrennungskraftmaschine 10 zugeführt werden.

Anhand der Erläuterungen wird deutlich, dass dem im Saugrohr 20 herrschenden Saugrohrdruck p1 für die Einstellung von Betriebsmodi der Verbrennungskraftmaschine 10 eine erhebliche Bedeutung zukommt. Damit das Motorsteuergerät 56 sowohl das Kraftstoff-Einspritzsystem 58, die Abgasrückführung und/oder die Tankentlüftung entsprechend externer Vorgaben, beispielsweise von einem Kraftfahrzeugführer, und/oder Betriebsbedingungen der Verbrennungskraftmaschine und einem im Saugrohr 20 herrschenden Saugrohrdruck p1 steuern beziehungsweise regeln kann, muss eine Genauigkeit des vom Saugrohrdrucksensor 34 gelieferten Sensorsignales 68 überprüft werden. Mögliche Fehler liegen beispielsweise in Alterungserscheinungen des Saugrohrdrucksensors 34, die zu Messfehlern - und damit zu Fehlern des Signales 68 - führen könnten. Ferner können Verunreinigungen der Verbrennungsluft zu Funktionsbeeinträchtigungen des Saugrohrdrucksensors 34 führen.

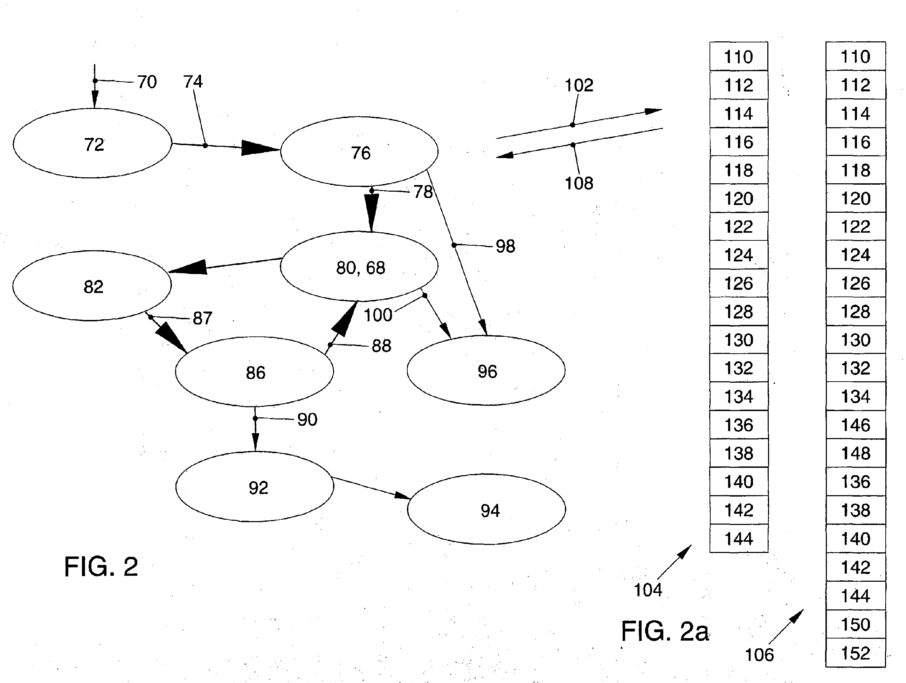

Anhand der Erläuterung der Funktion der Verbrennungskraftmaschine 10 wird deutlich, dass Ansteuerungen des Tankentlüftungsventils 42, des Abgasrückführungsventils 28, der Drosselklappe 24 und/oder Einspritzventile 60 zu einer Beeinflussung des Saugrohrdruckes p1 führen, da hierdurch Verbindungen zu unter abweichenden Drücken p2, p3, p4 beziehungsweise p5 stehenden Medien freigegeben werden. Anhand von Figur 2 wird das erfindungsgemäße Verfahren zum Überprüfen des Saugrohrdrucksensors 34 erläutert. Bei einem Start 70 des Kraftfahrzeuges, beispielsweise durch Betätigen des Zündschlosses, wird das Prüfungsverfahren initialisiert (Feld 72). Anschließend wird über eine Abfrage 74 geprüft, ob Freigabebedingungen 76 für das Prüfungsverfahren gegeben sind. Auf die Freigabebedingungen 76 wird anhand von Figur 2a noch näher eingegangen. Die Freigabebedingungen 76 beinhalten beispielsweise parallel ablaufende Steuerungsvorgänge oder parallel ablaufende Diagnoseverfahren anderer Einrichtungen des Kraftfahrzeuges, die durch das Prüfungsverfahren beeinflusst werden könnten.

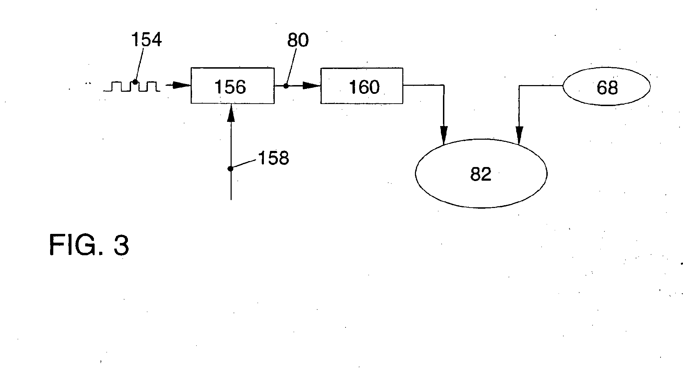

Sind die Freigabebedingungen 76 erfüllt, erfolgt über ein Signal 78 eine Stimulation des Prüfungsverfahrens, in dem ein den Saugrohrdruck p1 beeinflussendes Stellmittel, beispielsweise das Tankentlüftungsventil 42, die Drosselklappe 24, das Abgasrückführungsventil 28 stimuliert wird, indem dem aktuellen Ansteuersignal eines dieser Stellmittel als Testmuster überlagert wird. Das Testmuster besteht aus einzelnen Impulsen, deren Folge, Dauer und/oder Amplitude den Eigenschaften der Verbrennungskraftmaschine 10 beziehungsweise dem Saugrohr 20 angepasst ist. Als Testmuster 80 werden sogenannte Pseudorandom-Impulsfolgen verwendet. Die Amplitude des Testmusters 80 ist hierbei so klein gewählt, dass eine Beeinträchtigung des Betriebes der Verbrennungskraftmaschine 10 vermieden werden. Während der Stimulation des Testmusters 80 wird das Sensorsignal 68 des Saugrohrdrucksensors 34 aufgezeichnet. Das Testmuster 80 und das Sensorsignal 68 werden einer Kreuzkorrelation 82 zugeführt. Vor Durchführung der Kreuzkorrelation 82 kann -wie Figur 3 zeigt - eine Vorverarbeitung des Testmusters 80 erfolgen.

Nach Durchführung der Kreuzkorrelation 82 wird mittels eines Signals 84 eine Wiederholungsprüfung 86 ausgelöst. Hierbei wird die Anzahl der durchgeführten Messzyklen mit einer vorgebbaren Anzahl verglichen. Ist die Anzahl der durchgeführten Messzyklen kleiner als die vorgegebene Zahl, wird über ein Signal 88 die Wiederholungsprüfung ausgelöst. Die Kreuzkorrelation 82 wird somit quasi neu stimuliert. Ist die Anzahl der durchgeführten Messzyklen gleich der vorgegebenen Anzahl, wird über ein Signal 90 eine Diagnose 92 durchgeführt. Bei der Diagnose 92 wird ein Korrelationskoeffizient der durchgeführten Korrelationsrechnung 82 überprüft. Weist dieser Korrelationskoeffizient einen Wert von nahe 1 auf, sind das Testmuster 80 und das Sensorsignal 68 im Sinne der Korrelationsrechnung identisch. Weist der Korrelationskoeffizient hingegen einen Wert von nahe 0 auf, besteht kein Zusammenhang zwischen dem Testmuster 80 und dem Sensorsignal 68, so dass auf einen Fehler 94 erkannt wird. Nach der erreichten Anzahl der Wiederholungsprüfungen 86 wird ein mittlerer Korrelationsfaktor bestimmt, der mit einem Fehlerschwellwert vergleichen wird. Wird der Fehlerschwellwert überschritten, heißt dies, dass das Testmuster 80 sich in dem Saugrohrdruck p1, also dem Sensorsignal 68, wiederfindet. Dies bedeutet, die Funktion des Saugrohrdrucksensors 34 ist einwandfrei. Wird der Fehlerschwellwert unterschritten, wird die Fehlermeldung 94 ausgeworfen. Bei Erkennen des Fehlers 94 kann beispielsweise einem Fahrzeugführer durch ein optisches Signal eine Information gegeben werden, dass der Saugrohrdrucksensor 34 fehlerhaft ist. Ferner kann der Fehler 94 im Motorsteuergerät 56 eingespeichert werden, so dass bei einer nächsten Wartungsdiagnose ein entsprechender Hinweis ergeht.

Ein Abbruch 96 des Prüfungsverfahrens findet beispielsweise statt, wenn die Prüfung der Freigabebedingungen 76 über ein Signal 98 ergeben hat, dass die notwendigen definierten Freigabebedingungen 76 nicht gegeben sind. Ferner kann während der Stimulation der Kreuzkorrelation 82 ein Signal 100 generiert werden, das ebenfalls zum Abbruch 96 führt. Das Signal 100 kann beispielsweise ein Fehlersignal sein, das bei fehlender oder unplausibler Messgröße 68 (Sensorsignal 68), Ablauf einer vorgesehenen Gesamtstandzeit des Saugrohrdrucksensors 34 und/oder bei Erreichen der vorgegebenen Anzahl der durchzuführenden Messzyklen während der Wiederholungsprüfung 86 erzeugt wird. Nach Abbruch des Prüfungsverfahrens kann beispielsweise ein Timer gestartet werden, der das Prüfungsverfahren durch Neuinitialisierung 72 wieder startet. Gegebenenfalls kann vorgesehen sein, dass das Prüfungsverfahren mit jedem Neustart der Verbrennungskraftmaschine 10 abläuft.

Die Kreuzkorrelation kann passiv oder - wie erläutert - aktiv durchgeführt werden. Bei der passiven Kreuzkorrelation werden die auszuwertenden Signale, hier das Ansteuersignal des Abgasrückführungsventils 28, der Drosselklappe 24 oder des Tankentlüftungsventils 42 und die Messgröße 68, unbeeinflusst verarbeitet. Bei der beschriebenen aktiven Kreuzkorrelation werden die in die Kreuzkorrelation eingehenden Ansteuersignale mit Stimulationssignalen angeregt, so dass eine Empfindlichkeit des Prüfungsverfahrens gesteigert werden kann. Diese Stimulation besteht in der beschriebenen Überlagerung mit dem Testmuster 80, das aus einzelnen Impulsen besteht, deren Folge, Dauer und Amplitude an die Eigenschaften der Verbrennungskraftmaschine 10 beziehungsweise des Saugrohrs 20 angepasst werden. Während der Stimulation des Testmusters 80 können die Amplituden des Testmusters 80 aufgrund der hohen Empfindlichkeit der Kreuzkorrelationsrechnung 82 so klein gehalten werden, dass mit einer relevanten Beeinflussung von Drehzahl und/oder Drehmoment der Verbrennungskraftmaschine 10 nicht zu rechnen ist.

Anhand des in Figur 2a gezeigten Blockschaltbildes wird die Überprüfung der Freigabebedingungen 76 verdeutlicht. Die Freigabebedingungen 76 sind an eine Abfrage 102 an Blöcke von Freigabebedingungen geknüpft. In Figur 3 sind schematisch zwei Blöcke 104 und 106 von Freigabebedingungen beziehungsweise definierten Betriebsbedingungen von unterschiedlichen Verbrennungskraftmaschinen 10 dargestellt. Der Block 104 ist einer Verbrennungskraftmaschine mit Saugrohreinspritzung und der Block 106 einer Verbrennungskraftmaschine mit Kraftstoff-Direkteinspritzung zugeordnet. Entsprechend den hierdurch gegebenen unterschiedlichen konstruktiven Randbedingungen sind unterschiedliche Freigabebedingungen beziehungsweise definierte Betriebsparameter während der Durchführung des anhand von Figur 2 erläuterten Diagnoseverfahrens erforderlich. Die Einhaltung der Freigabebedingungen beziehungsweise die Erreichung der definierten Betriebsparameter wird durch ein Signal 108 an die Freigabebedingungsüberprüfung 76 quittiert. Erst wenn dieses Quittiersignal 108 anliegt, wird die eigentliche Diagnose des Saugrohrdrucksensors 34 in erläuterter Weise frei gegeben.

Für eine Verbrennungskraftmaschine mit Saugrohreinspritzung (Block 104) sind als Freigabebedingungen definiert:
- 110: Verbrennungskraftmaschine 10 ist im Leerlauf oder es liegt ein Teillastbereich vor, der durch einen Saugrohrdruck und eine Motordrehzahl definiert ist;
- 112: ein Saugrohrdruck ist stabil, das heißt, eine Differenz zwischen einem maximalen und einem minimalen Saugrohrdruck innerhalb einer Zeitspanne vor der Diagnose und während der Diagnose befindet sich unterhalb eines vorgegebenen Schwellenwertes;
- 114: wird das Testmuster 80 dem Abgasrückführungsventil 28 überlagert, muss dieses vor Beginn der Diagnose geöffnet sein und die Ventilposition des Abgasrückführungsventils 28 liegt oberhalb eines vorgegebenen Schwellwertes;
- 116: wird das Testmuster 80 dem Tankentlüftungsventil 42 überlagert, muss dieses vor Beginn der Diagnose geöffnet sein und die Ventilposition des Tankentlüftungsventils 42 muss oberhalb eines vorgegebenen Schwellwertes sein. Wird das Testmuster 80 einer anderen Stellgröße überlagert, ist das Tankentlüftungssystem 36 geschlossen;
- 118: vom Motorsteuergerät 56 werden keine Fehler an den beteiligten Sensoren und/oder Stellgliedern erkannt;
- 120: ein Bremsschalter ist für eine festlegbare Zeit vor der Diagnose des Saugrohrdrucksensors 34 nicht geschlossen gewesen, die festlegbare Zeit ist aus einer Fahrzeuggeschwindigkeit ableitbar, da bei einem Bremsvorgang bei höherer Geschwindigkeit der Saugrohrdruck stärker zur Betätigung der Bremsanlage beansprucht wird;
- 122: eine Betriebstemperatur der Verbrennungskraftmaschine liegt oberhalb eines vorgebbaren Schwellwertes (erfassbar über eine Kühlmitteltemperatur (Kühlwassertemperatur));
- 124: eine Motordrehzahl ist größer als ein vorgebbarer Schwellwert, insbesondere ist eine Startendedrehzahl erreicht;
- 126: ein Diagnosemanager gibt die Diagnose des Saugrohrdrucksensors frei;
- 128: eine elektrische Laständerung im Kraftfahrzeug ist kleiner als ein vorgebbarer Schwellwert;
- 130: es findet keine Katalysator-Heizmaßnahme, wie beispielsweise eine Beeinflussung des Zündwinkels oder eine Aktivierung der Einspritzung, statt, die Einfluss auf den Saugrohrdruck haben können;
- 131: es findet keine Nockenwellenverstellung statt;
- 134: es findet keine Saugrohrumschaltung statt.

Ferner sind vor Auslösung des Quittiersignals 108 folgende Betriebsparameter der Verbrennungskraftmaschine 10 definiert:
- 135: während der Diagnose wird die Position desjenigen Ventils, dem das Testmuster 80 überlagert wird, beibehalten (bis auf die Änderung durch das Testmuster 80 selber);
- 138: der nunmehr festen Ventilposition wird das Testmuster 80 überlagert;
- 140: eine Leerlaufregelung der Verbrennungskraftmaschine 10 wird eingefroren;
- 142: wenn das Testmuster 80 nicht dem Tankentlüftungsventil 42 überlagert wird, wird dieses vor Beginn der Diagnose geschlossen;
- 144: wenn das Testmuster 80 nicht dem Abgasrückführungsventil 28 überlagert wird, wird dessen Ventilstellung während der Diagnose eingefroren.

Im Block 106 sind zusätzlich weitere Freigabebedingungen beziehungsweise definierte Betriebsbedingungen der Verbrennungskraftmaschine 10 bei Kraftstoff-Direkteinspritzern definiert. Dies ist erforderlich, da bei Kraftstoff-Direkteinspritzern eine Reihe weiterer Stellglieder vorhanden sind, die einen Saugrohrdruck beeinflussen können. Ferner sind Kraftstoff-Direkteinspritzer in unterschiedlichen Betriebsarten, insbesondere einem Schichtbetrieb oder Homogenbetrieb, betreibbar, die sich unter anderem auch durch ein deutlich unterschiedliches Niveau des Saugrohrdruckes, insbesondere auch durch eine deutlich abweichende Regelung des Saugrohrdruckes, unterscheiden.

Zusätzlich zu den bereits vorhergehend benannten Freigabebedingungen beziehungsweise definierten Betriebsparametern sind deshalb folgende Freigabebedingungen einzuhalten:
- 146: es findet keine Betriebsartenumschaltung, beispielsweise zwischen Schichtbetrieb und Homogenbetrieb, statt und es ist eine Mindestzeit seit der letzten Betriebsartenumschaltung vergangen;
- 148: es findet keine Änderung der Ladungsbewegungsklappe statt.

Ferner sind vor Auslösung des Freigabesignals 108 folgende Betriebsparameter der Verbrennungskraftmaschine (bei Kraftstoff-Direkteinspritzern) definiert:
- 150: eine Prioritätensteuerung der Betriebsarten (Schichtbetrieb oder Homogenbetrieb) ist so verändert, dass dann, wenn die Diagnose des Saugrohrdrucksensors 34 gestartet wurde, eine Betriebsartenumschaltung nicht stattfindet;
- 152: eine Saugrohrdruckregelung im Schichtbetrieb wird während der Diagnose des Saugrohrdrucksensors 34 ausgesetzt.

Figur 3 verdeutlicht in einem Blockschaltbild die Durchführung der Kreuzkorrelation 82 zwischen dem Testmuster 80 und der Messgröße 68. Das Ansteuersignal 154 des Stellgliedes (Tankentlüftungsventil 42, Drosselklappe 24, Abgasrückführungsventil 28), das mit dem Testmuster überlagert werden soll, wird einem Signalbaustein 156 zugeführt. Dort wird das Signal 154 mit einem Pseudorandomsignal 158 überlagert, so dass das Testmuster 80 erhalten wird. Das Testmuster 80 wird über einen Tiefpassfilter 160 geführt, das ein PT1-Glied umfasst. Hierdurch wird erreicht, dass der Signalverlauf des Testmusters 80 dem Signalverlauf der Messgröße 68 im Idealfall (bei der Annahme, dass keine Störungen auftreten) identisch ist. Insbesondere wird hierdurch die Flankensteilheit des Signals 154 dem Flankenanstieg der Messgröße 68 angepasst. Die Flanken der Messgröße 68 weisen für die sogenannten Verzögerungsglieder erster Ordnung typische Signalformen einer e-Funktion auf. Diese e-Funktion wird durch das Tiefpassfilter 160 für das Testmuster 80 nachgebildet, so dass die anschließende Kreuzkorrelation 82 zu großen Korrelationskoeffizienten (gegen 1) führt. Hierdurch wird die Genauigkeit der Kreuzkorrelation erhöht.

**BEZUGSZEICHENLISTE**

| | | | |
|---|---|---|---|
| 10 | Verbrennungskraftmaschine | 70 | Start des Kraftfahrzeuges |
| 12 | Sauganlage | 72 | Feld (Initialisierung des Prüfungsverfahrens) |
| 14 | Abgasanlage | | |
| 16 | Abgaskanal | 74 | Abfrage |
| 18 | Abgasauslass | 76 | Freigabebedingungen |
| 20 | Saugrohr | 78 | Signal |
| 22 | Quelle | 80 | Testmuster |
| 24 | Drosselklappe | 82 | Kreuzkorrelation |
| 26 | Verbindungsleitung | 84 | Signal |
| 28 | Abgasrückführungsventil | 86 | Wiederholungsprüfung |
| 30 | Lambdasonde | 88 | Signal |
| 32 | Luftmassensensor | 90 | Signal |
| 34 | Saugrohrdrucksensor | 92 | Diagnose |
| 36 | Tankentlüftungssystem | 94 | Fehler |
| 38 | Verbindungsleitung | 96 | Abbruch |
| 40 | Tank | 98 | Signal |
| 42 | Tankentlüftungsventil | 100 | Signal |
| 44 | Verbindung | 102 | Abfrage |
| 46 | Filtereinrichtung | 104 | Block |
| 48 | Aktivkohlebehälter | 106 | Block |
| 50 | Aktivkohle | 108 | Signal |
| 52 | Sammelraum | 110 | Freigabebedingungen |
| 54 | Verbindung | 152 | Freigabebedingungen |
| 56 | Motorsteuergerät | 156 | Signalbaustein |
| 58 | Kraftstoff-Einspritzsystem | 158 | Pseudorandomsignal |
| 60 | Einspritzventile | 160 | Tiefpassfilter |
| 62 | Verbindungsleitungen | p1 | Druck der Verbrennungsluft / Saugrohrdruck |
| 64 | Zylinder | | |
| 66 | Kraftstoffzuführung | p2 | Druck des Kraftstoffes |
| 68 | Sensorsignal (Messgröße) | p3 | Druck des Abgases |
| | | p4 | Druck im Tank |

## Patentansprüche

1. Verfahren zur Diagnose eines Saugrohrdrucksensors eines Kraftstoff-Einspritzsystems einer Verbrennungskraftmaschine bei dem Kraftstoff über eine Sauganlage einer Verbrennungsluft zugeführt wird, wobei die Verbrennungsluft unter einem Saugrohrdruck steht, der Mittels des Saugrohrdrucksensors gemessen wird und ein dem aktuellen Saugrohrdruck entsprechendes Sensorsignal einem Motorsteuergerät zur Berücksichtigung bei der Einstellung von Betriebsmodi der Verbrennungskraftmaschine zur Verfügung gestellt wird, wobei das Sensorsignal (68) mit einem Ansteuersignal eines den Saugrohrdruck beeinflussenden Stellmittels (42, 24, 28) kreuzkorreliert und ein Korrelationskoeffizient als Diagnosesignal des Saugrohrdrucksensors ausgewertet, als Ansteuersignal ein Ansteuersignal eines Tankentlüftungsventils (42), ein Ansteuersignal einer Drosselklappe (24) verwendet oder ein Ansteuersignal eines Abgasrückführungsventils (28) ausgewertet und dem Ansteuersignal ein Testmuster (80) überlagert wird.

2. Verfahren nach Anspruch 1, **dadurch gekennzeichnet, dass** während der Diagnose die Position desjenigen Ventils, dessen Ansteuersignal dem Testmuster (80) überlagert wird, beibehalten wird, bis auf die Änderung durch das Testmuster (80) selber.

3. Verfahren nach Anspruch 1 oder 2, **dadurch gekennzeichnet, dass** die Kreuzkorrelation in einer vorgebbaren Anzahl von Messzyklen wiederholt wird.

4. Verfahren nach einem der vorhergehenden Ansprüche, **dadurch gekennzeichnet, dass** ein Saugrohrdruck stabil ist, das heißt, eine Differenz zwischen einem maximalen und einem minimalen Saugrohrdruck innerhalb einer Zeitspanne vor der Diagnose und während der Diagnose befindet sich unterhalb eines vorgegebenen Schwellenwertes.

5. Verfahren nach einem der vorhergehenden Ansprüche, **dadurch gekennzeichnet, dass**, wenn das Testmuster (80) von dem Abgasrückführungsventil (28) überlagert wird, dieses vor Beginn der Diagnose geöffnet sein muss und die Ventilposition des Abgasrückführungsventils (28) oberhalb eines vorgegebenen Schwellwertes liegt.

6. Verfahren nach einem der vorhergehenden Ansprüche, **dadurch gekennzeichnet, dass**, wenn das Testmuster (80) dem Tankentlüftungsventil (42) überlagert wird, dieses vor Beginn der Diagnose geöffnet sein muss und die Ventilposition des Tankentlüftungsventils (42) oberhalb eines vorgegebenen Schwellwertes sein muss.

7. Verfahren nach Anspruch 6, **dadurch gekennzeichnet, dass**, wenn das Testmuster (80) einer anderen Stellgröße überlagert, das Tankentlüftungssystem (36) geschlossen ist.

8. Verfahren nach einem der vorhergehenden Ansprüche, **dadurch gekennzeichnet, dass** ein Bremsschalter für eine festlegbare Zeit vor der Diagnose des Saugrohrdrucksensors (34) nicht geschlossen gewesen ist, die festlegbare Zeit aus einer Fahrzeuggeschwindigkeit ableitbar ist, da bei einem Bremsvorgang bei höherer Geschwindigkeit der Saugrohrdruck stärker zur Betätigung der Bremsanlage beansprucht wird.

9. Verfahren nach einem der vorhergehenden Ansprüche, **dadurch gekennzeichnet, dass** eine Betriebstemperatur der Verbrennungskraftmaschine oberhalb eines vorgebbaren Schwellwertes erfassbar über eine Kühlmitteltemperatur liegt.

10. Verfahren nach einem der vorhergehenden Ansprüche, **dadurch gekennzeichnet, dass** ein Diagnosemanager die Diagnose des Saugrohrdrucksensors freigibt.

11. Verfahren nach einem der vorhergehenden Ansprüche, **dadurch gekennzeichnet, dass** der nunmehr festen Ventilposition das Testmuster (80) überlagert wird.

12. Verfahren nach einem der vorhergehenden Ansprüche, **dadurch gekennzeichnet, dass** wenn das Testmuster (80) nicht dem Tankentlüftungsventil (42) überlagert wird, dieses vor Beginn der Diagnose geschlossen wird.

13. Verfahren nach einem der vorhergehenden Ansprüche, **dadurch gekennzeichnet, dass**, wenn das Testmuster (80) nicht dem Abgasrückführungsventil (28) überlagert wird, dessen Ventilstellung während der Diagnose eingefroren wird.

14. Verfahren nach einem der vorhergehenden Ansprüche, **dadurch gekennzeichnet, dass** keine Betriebsartenumschaltung stattfindet, beispielsweise zwischen Schichtbetrieb und Homogenbetrieb, und es Ist eine Mindestzeit seit der letzten Betriebsartenumschaltung vergangen.

15. Verfahren nach einem der vorhergehenden Ansprüche **dadurch gekennzeichnet, dass** eine Prioritätensteuerung der Betriebsarten so verändert ist, dass dann, wenn die Diagnose des Saugrohrdrucksensors (34) gestartet wurde, eine Betriebsartenumschaltung nicht stattfindet.

## Claims

1. Method for diagnosing an intake manifold pressure sensor of a fuel injection system of an internal combustion engine in which fuel is fed with combustion air via a suction system, wherein the combustion air is under an intake manifold pressure which is measured by means of the intake manifold pressure sensor, and a sensor signal corresponding to the current intake manifold pressure is made available to an engine control unit for taking into account during the setting of operating modes of the internal combustion engine, wherein the sensor signal (68) is cross-correlated with an actuation signal of an actuating means (42, 24, 28) which influences the intake manifold pressure, and a correlation coefficient is evaluated as a diagnosis signal of the intake manifold pressure sensor, an actuation signal of a tank venting valve (42) or an actuation signal of a throttle valve (24) is used as an actuation signal or an actuation signal of an exhaust gas recirculation valve (28) is evaluated and a test pattern (80) is superimposed on the actuation signal.

2. Method according to Claim 1, **characterized in that** during the diagnosis the position of that valve whose actuation signal is superimposed on the test pattern (80) is retained with the exception of the change as a result of the test pattern (80) itself.

3. Method according to Claim 1 or 2, **characterized in that** the cross-correlation is repeated with a predefinable number of measuring cycles.

4. Method according to one of the preceding claims, **characterized in that** an intake manifold pressure is stable, that is to say a difference between a maximum and a minimum intake manifold pressure within a time period before the diagnosis and during the diagnosis is below a predefined threshold value.

5. Method according to one of the preceding claims, **characterized in that** if the test pattern (80) is superimposed by the exhaust gas recirculation valve (28), the latter has to be open before the start of the diagnosis and the valve position of the exhaust gas recirculation valve (28) is above a predefined threshold value.

6. Method according to one of the preceding claims, **characterized in that** if the test pattern (80) is superimposed on the tank venting valve (42), the latter has to be open before the start of the diagnosis and the valve position of the tank venting valve (42) has to be above a predefined threshold value.

7. Method according to Claim 6, **characterized in that** if the test pattern (80) is superimposed on another manipulated variable, the tank venting system (36) is closed.

8. Method according to one of the preceding claims, **characterized in that** a brake switch has not been closed for a definable time before the diagnosis of the intake manifold pressure sensor (34), and the definable time can be derived from a vehicle speed, since in the case of a braking process at a relatively high speed the intake manifold pressure is required to a greater extent for the actuation of the brake system.

9. Method according to one of the preceding claims, **characterized in that** an operating temperature of the internal combustion engine is above a predefinable threshold value which can be detected by means of a coolant temperature.

10. Method according to one of the preceding claims, **characterized in that** a diagnosis manager releases the diagnosis of the intake manifold pressure sensor.

11. Method according to one of the preceding claims, **characterized in that** the test pattern (80) is superimposed on the valve position which is now fixed.

12. Method according to one of the preceding claims, **characterized in that** if the test pattern (80) is not superimposed on the tank venting valve (42), the latter is closed before the start of the diagnosis.

13. Method according to one of the preceding claims, **characterized in that** if the test pattern (80) is not superimposed on the exhaust gas recirculation valve (28), the valve position thereof is frozen during the diagnosis.

14. Method according to one of the preceding claims, **characterized in that** no switching over of the operating mode takes place, for example between stratified mode and homogeneous mode, and a minimum time has passed since the last switching over of the operating mode.

15. Method according to one of the preceding claims, **characterized in that** priority actuation of the operating modes is changed in such a way that when the diagnosis of the intake manifold pressure sensor (34) has been started switching over of the operating mode does not take place.

## Revendications

1. Procédé de diagnostic d'un capteur de pression de conduit d'aspiration d'un système d'injection de carburant pour moteur à combustion interne, dans lequel
du carburant est amené à de l'air de combustion par une installation d'aspiration,
l'air de combustion est plané sous une pression de conduit d'aspiration mesurée au moyen du capteur de pression de conduit d'aspiration et
un signal de capteur qui correspond à à pression effective du conduit d'aspiration est amené à un appareil de commande de moteur pour être pris en compte lors de l'établissement des modes de fonctionnement du moteur à combustion interne,
le signal de capteur (68) subit une corrélation croisée avec un signal de commande d'un moyen de réglage (42, 24, 28) qui agit sur la pression du conduit d'aspiration et un coefficient de corrélation est évalué en tant que signal de diagnostic du capteur de pression de conduit d'aspiration,
un signa de commande d'une soupape (42) d'évent de réservoir est utilisé comme signal de commande,
un signal de commande d'un clapet d'étranglement (24) est utilisé comme signal de commande ou
un signal de commande d'une soupape de recirculation (28) des gaz d'échappement est évalué et
un motif de test (80) est superposé au signal de commande.

2. Procédé selon la revendication 1, **caractérisé en ce que** pendant le diagnostic, la position de la vanne dont le signal de commande est superposé au motif de test (80) est conservée jusqu'à être modifiée par le motif de test (80) proprement dit.

3. Procédé selon les revendications 1 ou 2, **caractérisé en ce que** le signal de corrélation croisée est répété dans un nombre prédéterminé de cycles de mesure.

4. Procédé selon l'une des revendications précédentes, **caractérisé en ce qu'**une pression de conduit d'aspiration est stable, en d'autres termes qu'une différence entre une pression maximale et une pression minimale du conduit d'aspiration pendant un intervalle de temps avant le diagnostic et pendant le diagnostic est inférieure à une valeur de seuil prédéterminée.

5. Procédé selon l'une des revendications précédentes, **caractérisé en ce que** si le motif de test (80) est superposé à la soupape (28) de recirculation de gaz d'échappement, cette dernière doit être ouverte avant le début du diagnostic et la position de la soupape (28) de recirculation de gaz d'échappement est située au-dessus d'une valeur de seuil prédéterminée.

6. Procédé selon l'une des revendications précédentes, **caractérisé en ce que** si le motif de test (80) est superposé à la soupape (42) d'évent de réservoir, cette dernière doit être ouverte avait le début du diagnostic et la position de la soupape (42) d'évent de réservoir doit être supérieure à une valeur de seuil prédéterminée.

7. Procédé selon la revendication 6, **caractérisé en ce que** si le motif de test (80) est superposé à une autre grandeur de réglage, le système (36) d'évent de réservoir est fermé.

8. Procédé selon l'une des revendications précédentes, **caractérisé en ce que** si un commutateur de freinage n'a pas été fermé pendant une durée définie avant le diagnostic du capteur (34) de pression de conduit d'aspiration, la durée définie peut être déduite de la vitesse du véhicule, parce que lors d'une opération de freinage à plus haute vitesse, la pression dans le conduit d'aspiration est sollicitée plus fortement pour actionner l'installation de freinage.

9. Procédé selon l'une des revendications précédentes, **caractérisé en ce que** la température de fonctionnement du moteur à combustion interne au-dessus d'une valeur de seuil prédéterminée peut être saisie par l'intermédiaire de la température d'un fluide de refroidissement.

10. Procédé selon l'une des revendications précédentes, **caractérisé en ce qu'**un gestionnaire de diagnostic libère le diagnostic du capteur de pression du conduit d'alimentation.

11. Procédé selon l'une des revendications précédentes, **caractérisé en ce que** le motif de test (80) est superposé à la position alors fixe de la soupape.

12. Procédé selon l'une des revendications précédentes, **caractérisé en ce que** lorsque le motif de test (80) n'est pas superposé à la soupape (42) d'évent de réservoir, cette dernière est fermée avant le début du diagnostic.

13. Procédé selon l'une des revendications précédentes, **caractérisé en ce que** lorsque le motif de test (80) n'est pas superposé à la soupape (28) de recirculation de gaz d'échappement, la position de cette soupape est bloquée pendant le diagnostic.

14. Procédé selon l'une des revendications précédentes, **caractérisé en ce qu'**aucune modification du type de fonctionnement n'a lieu, par exemple entre un fonctionnement stratifié et un fonctionnement homogène, et **en ce qu'**une durée minimale s'écoule depuis la dernière modification de type de fonctionnement.

15. Procédé selon l'une des revendications précédentes, **caractérisé en ce qu'**une commande de priorité des modes de fonctionnement est modifiée de telle sorte que si le diagnostic du capteur (34) de pression du conduit d'aspiration a été lancé, aucune modification de type de fonctionnement n'a lieu.
